# EUROPEAN PATENT APPLICATION

(11) **EP 4 421 059 A1**
(43) Date of publication of application: **28.08.2024**
(21) Application number: 23158719.7
(22) Date of filing: 27.02.2023
(51) Int. Cl.: C05D 9/02, C01F 11/12, C01F 11/18, C02F 1/42, C04B 18/14, C05G 3/80, C05G 5/30

(54) **PRODUCTION OF METAL CARBONATE SOIL AMENDMENT FROM METAL SLAG**

(71) Applicant: Sabic Agri-Nutrients Company, 31961 Jubail Industrial City (SA)
(72) Inventor: Al-Rabhi, Mohamed, Houston, 77042 (US); Mamedov, Aghaddin, Sugar Land, 77478 (US); Hegde, Ravi, 562125 Bangalore (IN)
(74) Representative: Modiano, Gabriella Diana

(57) **Abstract**

Disclosed herein are methods of forming a soil amendment from metal slag, the method may comprise: increasing sodium in a bentonite clay by reacting bentonite clay and sodium salt to provide ion-exchanged sodium bentonite clay, wherein the bentonite clay comprises both sodium and calcium; feeding carbon dioxide through a reactor containing a mixture of the metal slag and the ion-exchanged sodium bentonite clay; wherein sodium ions of the ion exchanged bentonite clay transfers the carbon dioxide to a calcium silicate phase of the metal slag; reacting the ion-exchanged sodium bentonite clay with calcium silicate to consume the sodium carbonate of the ion-exchanged sodium bentonite clay and provide sodium silicate and calcium carbonate; reacting the sodium silicate to provide sodium carbonate and silicon dioxide; and combining the calcium carbonate and silicon dioxide to form the soil amendment, wherein the metal slag is a calcium slag silicate.

## Description

### FIELD OF DISCLOSURE

The present disclosure relates to the production of soil amendments and nutrients by the capture and storage of carbon dioxide.

### BACKGROUND

Carbon dioxide (CO₂) emission is a significant global warming concern and also affects growth and production of plants. Production of a carbon-based soil amendment made by the capture of greenhouse gases from the combustion of fossil fuels is a developing area in environmental chemistry. These methods allow for the capture of CO₂ and its conversion to soil amendments, which are useful agricultural materials. The production of carbon co-product while removing CO₂ emissions and producing a renewable soil amendment based on naturally abundant and inexpensive materials, such as metal silicates, provides dual benefits. In nature, the formation of carbonate minerals from atmospheric CO₂, or CO₂ mineralization, is one of the major processes in the global carbon cycle, but the process takes a long time because of the low concentration of CO₂ in the atmosphere. A primary strategy for CO₂ emission reduction is the capture and underground storage of CO₂. Alternatively, the carbon dioxide emissions may be chemically treated, which typically requires a reducing agent that converts the CO₂ to useful chemicals. Other strategies combine CO₂ chemical utilization with storage. For example, CO₂ is mineralized through chemical reactions and the produced mineral is used as a soil enrichment or additive. Mineralization of CO₂ according to any of these methods is a relatively slow process and, at a large scale, features significant energy costs.

Accordingly, there remains a need in the art for efficient processes that optimize mineralization of CO₂ to form a soil amendment. These and other needs are met by aspects of the present disclosure.

### SUMMARY OF THE DISCLOSURE

Aspects of the disclosure relate to methods of forming a soil amendment through sequestration of carbon dioxide. The method comprises (a) increasing content of sodium in a bentonite clay via ion exchange by reacting bentonite clay and a sodium salt to provide ion-exchanged sodium bentonite clay, wherein the bentonite clay comprises both sodium and calcium cations, wherein the bentonite clay comprises sodium ions bonded to bentonite structure; (b) feeding carbon dioxide through a reactor containing a mixture of the metal slag and the ion-exchanged sodium bentonite clay; (c) reacting the ion-exchanged sodium bentonite clay with- calcium silicate in a chain fashion to consume the sodium carbonate of the ion-exchanged sodium bentonite clay and provide sodium silicate and calcium carbonate; (d) reacting the sodium silicate with the carbon dioxide to provide sodium carbonate and silicon dioxide; and (e) combining the generated calcium carbonate and silicon dioxide to form the soil amendment. Step (c) may continue until sodium of the ion-exchanged sodium bentonite clay is consumed. The metal slag may be a calcium slag silicate.

### BRIEF DESCRIPTION OF THE FIGURES

The accompanying figures, which are incorporated in and constitute a part of this specification, illustrate several aspects and together with the description serve to explain the principles of the disclosure.

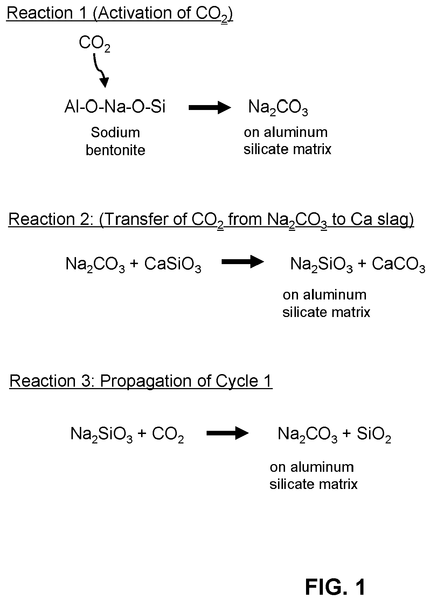

FIG. 1 is a diagram showing a series of reaction steps for the reaction of sodium compound of the bentonite clay with carbon dioxide and metal slag silicate.

### DETAILED DESCRIPTION

The rising levels of carbon dioxide (CO₂) in the Earth's atmosphere is a growing concern for global warming, which also affects the productivity of plants. Reduction of CO₂ emission has thus become a primary interest of many chemical companies. To address this issue, numerous nations and organizations are developing strategies to lower CO₂ emissions into the atmosphere. The production of a carbon-based soil amendment made by the capture of greenhouse gases from the combustion of fossil fuels is an important developing area in environmental chemistry. These methods allow for the capture of CO₂ and its conversion to soil amendments, which are useful agricultural materials. The ability to produce a large volume carbon co-product, while removing CO₂ emissions and producing a renewable soil amendment based on naturally abundant, inexpensive materials, such as metal silicates, provides dual benefits.

Soil amendments may be formed via processes of "mineral carbonation" or "carbon mineralization" where carbon dioxide is reacted with naturally occurring minerals, such as silicates or metal silicates, to form carbonate minerals, such as calcite (CaCO₃) and magnesite (MgCO₃), which remain stable for an essentially indefinite period of time. Mineral carbonation provides carbonate compounds that are thermodynamically stable, environmentally benign, and weakly soluble in meteoric water. These soil amendments are useful to reduce acidity and increase moisture content of treated soil. The capture of carbon while creating a useful carbon-based fertilizer/soil amendment would help restore nutrients that allow them to utilize the higher levels of CO₂ in atmosphere.

Methods of reacting metal silicates with carbon dioxide to provide soil amendments however are well known to have slow reaction kinetics. CO₂ mineralization is plagued by the slow rate of CO₂ with the host rock minerals because of the low permeability of CO₂ to rock structure. Sufficient time and special preparations are required to foster carbonation. These preparations, including digging of mineral rocks, collection, transportation, and preparation of microsphere particles, requiring considerable amounts of energy.

A number of studies have investigated soil amendment synthesis via the reaction of silicates and carbon dioxide, but such processes have a number of disadvantages. In one study, a soil amendment was synthesized by reacting carbon dioxide and silicates to produce metal carbonate and silicic acid or silica gel, which increased carbon content of the soil and led to the improvement of the soil mechanical characteristic. Oelkers, et. al. "Mineral Carbonation of CO2", Elements, Vol. 4, pp. 333-337.

United States Published Patent Application No. US 2004/037747A2 presents production of a carbon based soil amendment during capture of CO₂ through a combination of hydrated ammonia, fined gas containing CO₂, and charcoal.

Japanese Published Application JP N07265688A describes capture of CO₂ by metals. Industrial waste containing calcium oxide CaO and/or magnesium oxide MgO is brought into contact with water to leach calcium ions and/or magnesium ions and the ion-containing water is brought into contact with CO₂ to deposit CaCO₃ and/or MgCO₃. The generated CaCO₃ and/or MgCO₃, or a mixture of them with Ca(OH)₂ and a siliceous material, may be treated using an autoclave reaction.

Japanese Patent Publication JP 2006075717 A describes the capture and conversion of CO₂ to CaCO₃. Calcium carbonate is produced from a gas containing carbon dioxide and a calcium oxide-containing substance. A silica-containing substance and cement are added to the calcium carbonate, water is added and mixed, and molding is performed at a molding pressure of 60 to 120 megapascals (MPa).

Other studies have suggested the capture of CO₂ by rocks or rock formations. As described in Silicate Crystal Structure Impacts Reactivity with CO2 and Precipitate Chemistry, Environ. Sci. Technol. Lett., 2018, 5, 9, 558-563, naturally occurring minerals (such as olivine) react with CO₂ to form carbonate minerals. The carbonate materials capture the CO₂ from the atmosphere and store it in solid form where it will remain stable for thousands to millions of years.

Calcium silicates having a similar reaction performance with carbon dioxide as olivine have been described in the preparation of calcium carbonate. Jin, Z., et al. Preparation of precipitated calcium carbonate using wollastonite and CO2 from industrial exhaust, Brazilian Journal of Chemical Engineering, 15, 2022, https://doi.org/10.1007/s43153-021-00200-8. It was shown that calcium silicates with CO₂ achieve carbon dioxide storage and produce geothermal energy. These reactions however nominally produce calcium carbonate (CaCO₃) and amorphous silica (SiOₓ). It was reported that the crystal structure of silicate reacts with CO₂ and the reaction depends on the structure of parent silicate. The experiments were carried out in batch reactors with calcium silicate having a chain structure (wollastonite, calcium inosilicate mineral (CaSiO₃)) and ring structure (pseudo-wollastonite) at 150 °C and partial pressures of CO₂ at 0-11 MPa. Reaction of wollastonite with CO₂ produced CaCO₃ and SiOₓ, while the reaction of pseudo wollastonite with CO₂ produced plate like crystalline of calcium silicate phases, along with CaCO₃ and SiOₓ.

A cost-efficient process for the preparation of a soil amendment would thus include localized starting materials that do not require energy consuming preliminary steps or special preparations. Aspects of the present disclosure provide metal carbonate soil amendments using cost effective reagents sourced from steelmaking plants that produce both silicate-containing byproduct slag and high amounts of CO₂ emission.

The disclosed processes may utilize steelmaking slag, which comprises mostly calcium silicate, in the preparation of soil amendments with carbon dioxide. Carbon dioxide is produced at these same steel plants during the reduction of iron ore. The disclosed processes further utilize an ion-exchanged bentonite clay to facilitate the mineralization reaction between silicate and CO₂. Without wishing to be bound by any particular theory, the ion-exchanged bentonite provides sodium that may react with CO₂ and leads to the formation of an active intermediate for reaction with the metal silicate. In view of this, the ion-exchanged bentonite clay is generated to increase the concentration of sodium in the bentonite clay, thereby increasing mineralization activity of carbon dioxide through the formation of additional sodium carbonate for reaction with silicate.

The disclosed processes target CO₂ emission reduction while simultaneously producing useful agriculture products, namely, soil amendments.

### Processes

The disclosed processes achieve formation of a soil amendment from metal slag. The processes may comprise mineralizing a carbon dioxide source in the presence of an ion-exchanged sodium bentonite activator, the metal slag, and a further metal silicate source to form a soil amendment comprising calcium carbonate and silicon dioxide. The obtained soil amendments, comprising calcium carbonate and silicone dioxide, are useful agriculture products.

Without wishing to be bound by any particular theory, the bentonite clay activator may improve activity of the carbon dioxide for reaction with calcium silicate. The bentonite clay may undergo a solid-state reaction with calcium silicate in the presence of CO₂ which forms calcium carbonate and sodium silicate. The processes according to aspects of the disclosure provide a yield of calcium carbonate that is greater than the yield of comparable processes in the absence of bentonite clay. For example, the disclosed processes may provide a yield of calcium carbonate greater than 85% while a comparable process in the absence of bentonite clay may provide a yield of about 55%.

Aspects of the disclosure further relate to processes comprising: (a) increasing content of sodium in a bentonite clay via ion exchange by reacting bentonite clay and a sodium salt to provide ion-exchanged sodium bentonite clay, wherein the bentonite clay comprises both sodium and calcium cations, wherein the bentonite clay comprises sodium ions bonded to bentonite structure; (b) feeding carbon dioxide through a reactor containing a mixture of the metal slag and the ion-exchanged sodium bentonite clay; (c) reacting the ion-exchanged sodium bentonite clay with calcium silicate in a chain fashion to consume the sodium carbonate of the ion-exchanged sodium bentonite clay and provide sodium silicate and calcium carbonate; (d) reacting the sodium silicate with the carbon dioxide to provide sodium carbonate and silicon dioxide; and (c) combining the generated calcium carbonate and silicon dioxide to form the soil amendment. Step (c) may continue until sodium carbonate of the ion-exchanged sodium bentonite clay is consumed.

In various aspects, the disclosed processes comprise the following steps:
a) ion exchange between sodium ions Na⁺ and calcium ions Ca²⁺ in a reaction between sodium salt (such as sodium chloride or sodium hydroxide) and calcium bentonite clay to provide ion-exchanged sodium bentonite clay;
b) forming a mixture of ion-exchanged sodium bentonite clay and calcium slag;
c) contacting carbon dioxide with the mixture of ion-exchanged sodium bentonite clay and calcium slag;
d) reacting bentonite clay with calcium silicate of slag to form sodium silicate and calcium carbonate;

   CaSiO₃ + Na₂CO₃ → CaCO₃ + Na₂SiO₃ (1)
e) reacting the sodium silicate with the carbon dioxide to provide sodium carbonate and silicon dioxide;
f) forming a blend of calcium carbonate and silicon dioxide as a soil amendment.

Aspects of the present disclosure utilize an ion-exchanged bentonite clay to promote carbon dioxide adsorption and reaction with calcium silicate of steelmaking slag. The main mineral component of bentonite is montmorillonite, a hydrated di-octahedral alumino-silicate. Its general formula can be written as:

(Na,Ca)0.33(Al,Mg)₂(Si₄O₁₀)(OH)₂·nH₂O

Generally, bentonite clay consists primarily of crystalline clay minerals belonging to the smectite group, which are hydrous aluminum silicates containing iron and magnesium as well as either sodium or calcium. Two types of bentonite are recognized, sodium and calcium, and the uses of each depend on specific physical properties. The sodium component of sodium bentonite clay exists in the form of sodium oxide and sodium silicate. In the disclosed processes, the bentonite clay may comprise both sodium and calcium ions in its structure.

In various aspects, the bentonite clay may be present in an amount of 5% to 15% relative to the amount of calcium silicate.

As provided in step (a), reaction processes may first increase sodium ion content in the bentonite clay. Naturally occurring calcium bentonite has a very low proportion of exchangeable sodium (generally, calcium bentonite clay comprises more calcium oxide than sodium oxide) and a very high proportion of exchangeable calcium, but these values may vary significantly based on the type of bentonite. Moreno, J. "Wine Colloids", Enological Chemistry, Academic Press, 2012, p. 323-354. Calcium bentonite has been observed to comprise up to 5% or up to 4% sodium oxide, for example about 3.7%. As a further example, researchers have determined about 1.33 % sodium oxide compared to 2.09 % calcium oxide in a sample of calcium bentonite clay. Unnithan, R. Characterization of Na₂CO₃ activated Calcium Bentonite and its application as a GCL, International Journal of Engineering Research & Technology, IJERT, 2017 Conference Proceedings. Calcium-based bentonite clay can be transformed to sodium-based bentonite clay by exchange of Ca ions. The cation exchange capacity may be used as a measure of exchangeable calcium or sodium ions.

Increasing the sodium ion content in the bentonite clay may be achieved, for example, via an ion exchange reaction to provide an ion-exchanged bentonite clay. The ion-exchanged bentonite clay may be formed by reacting bentonite clay and a suitable sodium salt, such that the ion-exchanged bentonite clay contains sodium ions chemically bonded to bentonite structure.

Examples of suitable sodium salts may include sodium carbonate Na₂CO₃, sodium chloride NaCl, or sodium hydroxide NaOH, for example. In some aspects, the selected sodium salt may be added to a gel formulation of the bentonite clay. As an example, Ca ion exchange can be done by addition of any sodium salts, such as Na₂CO₃, NaCI or NaOH to the bentonite clay. The exchange of Ca by Na ions may be achieved by addition of the required amount of NaOH, Na₂CO₃ or NaCl to a bentonite clay gel at 25 °C under stirring for about 2 hours.

As provided herein, to facilitate the reaction of carbon dioxide with calcium silicate, carbon dioxide is first adsorbed with the ion-exchanged sodium bentonite clay. In various aspects, carbon dioxide from a suitable carbon dioxide source may be adsorbed with sodium oxide of sodium bentonite clay to form a first sodium carbonate. The carbon dioxide source may be contacted with a mixture comprising the ion-exchanged sodium bentonite clay and a metal slag as defined in step (b). As an example, the carbon dioxide may proceed through a reactor comprising the mixture of ion-exchanged sodium bentonite clay and the metal slag. In some aspects, the carbon dioxide may be fed through a Parr reactor containing a mixture of the ion-exchanged bentonite clay and calcium slag silicate, operating at a pressure of from about 10 bar to 100 bar and from about 60 °C to about 200 °C, for example, at about 25 bar and a temperature of about 60 °C.

Aspects of the present disclosure anticipate any suitable carbon dioxide source. The carbon dioxide source may be a gas stream containing carbon dioxide. In some examples, the carbon dioxide source is one or more streams produced as a byproduct of ethylene oxide production, a coke oven gas stream, a byproduct from a steel making plant, byproduct from a cracker reactor flue gas, byproduct from a power plant. In a specific example, the carbon dioxide source is a steel making plant or a steelmaking plant.

The metal slag may be a steelmaking slag. Steelmaking or steel slag may refer to a byproduct from the production of steel during the conversion of hot metal to crude steel in a basic oxygen furnace. It may be obtained during the separation of the molten steel from any impurities in steelmaking furnaces. In some examples, the metal slag and carbon dioxide are sourced from a single or the same steel making plant. The metal slag may comprise calcium oxide, silicone dioxide, iron, magnesium oxide, aluminum oxide, sulfur, phosphorus pentoxide, and manganese (II) oxide. Given the presence of both calcium oxide and silicone dioxide in the metal slag, the metal slag may be referred to as a calcium slag silicate.

Sodium ions of the ion exchanged bentonite clay may react with or adsorb the carbon dioxide and transfer carbon dioxide to the calcium silicate phase of the metal slag. The excellent colloidal properties of bentonite clay may enable the formation of a homogeneous mixture of bentonite clay and calcium silicate during adsorption and transformation of CO₂ to a calcium carbonate phase. The adsorption of CO₂ by sodium ions of the bentonite clay may lead to the formation of an active intermediate for a solid-state reaction with the metal silicate. In some aspects, an active sodium carbonate Na₂CO₃ intermediate is formed. The sodium carbonate intermediate may then continue mineralization of carbon dioxide and conversion of calcium silicate to calcium carbonate in a continuous fashion. Adsorption of carbon dioxide with the sodium bentonite clay may proceed at particular pressure and temperature conditions. As an example, adsorption may proceed at a pressure greater than atmospheric pressure and at a temperature greater than room temperature.

In further aspects, the ion-exchanged bentonite clay may undergo a solid-state reaction with a suitable silicate source, particularly a suitable metal silicate feedstock. The solid-state reaction of ion-exchanged sodium bentonite clay and the metal silicate may provide a sodium silicate. Many different types of metal-silicate feedstocks are amenable to carbonation by the disclosed processes, including naturally occurring silicates, such as those present in rocks and clay-rich formations, as well as, silicates present in industrial waste products including fly ash and waste concrete. Typically, the metal silicate feedstock is composed of one or more calcium silicates, magnesium silicates, iron-bearing silicates (such as basalt), or mixtures thereof, although other types of silicates may also be used. In specific aspects, the ion-exchanged bentonite clay may react with any metal silicate, particularly with calcium silicate to form sodium silicate and calcium carbonate.

In various aspects, the suitable metal silicate is olivine (Mg₂SiO₄), an abundant mineral, rich in magnesium and silicon. The mineral has been the focus of research for use in carbon mineralization and reacts readily because with the atmosphere and surface waters. Olivine forms the carbonate mineral magnesite via reactions, such as:

Mg₂SiO₄ (olivine) + 2 CO₂ (from gas or fluid) = 2MgCO₃ (magnesite) + SiO₂ (quartz)

In some aspects, the metal silicates used as feedstocks for the process can have a wide range of initial particle sizes. Generally, it is desirable to reduce the particle size of the metal silicate(s) prior to chemical treatment. For example, the particle size of the metal silicate(s) may be reduced to an average diameter of less than about 100 microns. Any suitable equipment may be used to reduce particle size. In various examples, the olivine magnesium silicate may have a wide range of initial particle sizes and may be processed to the reduce the particle size to the desired value or range.

Conventionally, sodium silicate is generally very active for capture of CO₂ and the formation of sodium carbonate. However, this adsorption of CO₂ is typically unstable and CO₂ may desorb after a duration of time. Without wishing to be bound by any particular theory, the high activity of the sodium compound of the bentonite clay for carbon dioxide acceptance may be used as an intermediate step for transformation of adsorbed CO₂ to carbonate of two valence metals, such as Mg, Ca, as shown in FIG. 1. The scheme involves the reaction of calcium slag with the CO₂ through catalytic activation with intermediate sodium carbonate-

The generated sodium silicate may be reacted with the carbon dioxide to provide sodium carbonate and silicone dioxide. The obtained final products calcium carbonate and silicone dioxide may be combined to form soil amendment.

Methods of the present disclosure further comprise forming the soil amendment as a coating material for a nutrient to provide a soil amendment complex. As an example, Suitable nutrients may include any of those conventionally used to improve soil performance or composition. Examples of suitable nutrients may include, but are not limited to, nitrogen, phosphorus, potassium, sulfur, or a combination thereof.

The coating material comprising the soil amendment may be produced via physical blending of metal carbonate with fertilizer or via direct application of metal carbonate. To form a soil amendment complex, the coating material comprising the soil amendment may be produced via impregnation of a mixture of the generated metal carbonate (such as calcium carbonate) and silicon dioxide by a salt comprising any of the suitable nutrients described herein. The soil amendment complex may be introduced to soil to improve a number of soil properties. In certain aspects, the silicon dioxide of the coating material comprising the soil amendment may further regulate the structure of dense soil giving the necessary porosity to soil to maintain humidity therein.

In some aspects, the disclosed reaction processes may proceed at a reaction temperature between 80 °C and 120 °C and proceed for about 72 hours.

In some aspects, the methods proceed at a reaction pressure of from 5 bar to 40 bar. For example, the method proceeds at a reaction pressure of about 25 bar. The reaction may proceed in a Parr reactor operated in non-continuous mode.

### Systems

Various systems may make use of the integrated processes described herein. In an aspect, a system for forming a carbon-based soil amendment via carbon dioxide mineralization may comprise a gas stream comprising carbon dioxide and a first reaction chamber comprising a suitable reactor bed.

The system may include a gas stream containing carbon dioxide. As an example, a flue gas containing carbon dioxide or a stream of pure carbon dioxide gas may be used. As provided herein, the gas stream containing carbon dioxide may be a byproduct from a steel making plant.

In various aspects, the system comprises a single reactor, such as a Parr reactor, which may be referred to as a first reaction chamber herein. Reaction steps may proceed in a single reactor bed in a continuous chain of reactions until sodium silicate is deplete in the first reaction chamber. The first reaction chamber may be configured for adsorption of the carbon dioxide with an ion-exchanged sodium bentonite clay to form a sodium carbonate intermediate.

The first reaction chamber may further be configured for contacting a mixture comprising metal slag and the ion-exchanged bentonite clay with carbon dioxide and for reacting a metal silicate with the sodium carbonate intermediate to produce a sodium metasilicate. The first reaction chamber may be configured for contacting the metal silicate with the gas stream containing the carbon dioxide to produce a carbonate of the metal. The system may include a supply of the metal silicate and carbon dioxide entering the system.

The disclosed reactions may take place in a single reactor bed. Reactions may proceed in a Parr reactor. In certain aspects, the Parr reactor may be operated in non-continuous mode.

In various aspects, an ion-exchanged sodium bentonite clay may be formed in any suitable container. The generated ion-exchanged sodium bentonite clay may be combined with steelmaking slag and housed in a suitable reaction vessel. The reaction vessel may be equipped to receive the gas stream containing carbon dioxide and/or a metal silicate such as calcium-silicate. The suitable reaction vessel may be a Parr reactor. Pressure within the Parr reactor may be maintained at about 25 bar and may be regulated using a pressure regulator. The temperature of the Parr reactor may be maintained at about 80 °C.

Further aspects of the disclosure relate to a system for sequestering carbon dioxide from a gas stream. The system may comprise a gas stream containing carbon dioxide; a supply of calcium-silicate; a first reaction chamber for (i) adsorbing an ion-exchanged bentonite clay with the carbon dioxide; (ii) contacting a mixture of metal slag and the ion-exchanged bentonite clay with the carbon dioxide, and (iii) contacting the mixture of metal slag and the ion-exchanged bentonite clay with the calcium silicate to provide a carbonate of metal in the metal slag.

### ASPECTS

The disclosed systems and methods include at least the following aspects.

Aspect 1. A method of forming a soil amendment from metal slag, the method comprising: increasing content of sodium in a bentonite clay via ion exchange by reacting bentonite clay and a sodium salt to provide ion-exchanged sodium bentonite clay, wherein the bentonite clay comprises both sodium and calcium cations, wherein the ion-exchanged bentonite clay contains sodium ions bonded to bentonite structure; feeding carbon dioxide through a reactor containing a mixture of the metal slag and the ion-exchanged sodium bentonite clay; wherein sodium ions of the ion exchanged bentonite clay adsorbs carbon dioxide and transfers the carbon dioxide to a calcium silicate phase of the metal slag; reacting the ion-exchanged sodium bentonite clay with-calcium silicate in a chain fashion to consume the sodium carbonate of the ion-exchanged sodium bentonite clay and provide sodium silicate and calcium carbonate; reacting the sodium silicate with the carbon dioxide to provide sodium carbonate and silicon dioxide; and combining the generated calcium carbonate and silicon dioxide to form the soil amendment, wherein the metal slag is a calcium slag silicate

Aspect 2. The method of claim 1, further comprising forming the soil amendment as a coating material for a nutrient.

Aspect 3. The method of claim 2, wherein the nutrient comprises nitrogen, phosphorus, potassium, sulfur, or a combination thereof.

Aspect 4. The method of any one of claims 1-3, wherein the ion exchange of step (b) proceeds at 25 °C for 2 hours.

Aspect 5. The method of any one of claims 1-4, wherein the metal slag is steelmaking slag.

Aspect 6. The method of any one of claims 1-5, wherein the metal slag comprises calcium oxide, silicone dioxide, iron, magnesium oxide, aluminum oxide, sulfur, phosphorus pentoxide, and manganese (II) oxide.

Aspect 7. The method of any of claims 1-6, wherein the reacting ion-exchanged sodium bentonite with metal silicate-is a solid state reaction.

Aspect 8. The method of any one of claims 1-7, wherein the sodium salt is sodium hydroxide, sodium carbonate, or sodium chloride.

Aspect 9. The method of any one of claims 1-8, wherein the step (b) feeding carbon dioxide proceeds at 25 bar and 60 °C.

Aspect 10. The method of any one of claims 1-9, wherein the method proceeds at a reaction temperature between 80 °C and 120 °C.

Aspect 11. The method of any one of claims 1-10, wherein the method proceeds at a reaction pressure of from 5 bar to 40 bar.

Aspect 12. The method of any one of claims 1-10, wherein the method proceeds at a reaction pressure of about 25 bar.

Aspect 13. The method of any one of claims 1-11, wherein reactions proceed in a Parr reactor operated in non-continuous mode.

Aspect 14. The method of any one of claims 1-13, wherein the carbon dioxide is provided from a source comprising one or more gas streams produced from a steelmaking plant.

Aspect 15. A system for forming a soil amendment, the system comprising: a gas stream containing carbon dioxide-and calcium silicate ; and a first reaction chamber for (i) adsorbing an ion-exchanged bentonite clay with the carbon dioxide; (ii) contacting a mixture of metal slag and the ion-exchanged bentonite clay with the carbon dioxide, and (iii) contacting the mixture of metal slag and the ion-exchanged bentonite clay to provide formation of a carbonate of metal from the metal slag.

Aspect 16. A method of forming a soil amendment from metal slag, the method comprising: mineralizing a carbon dioxide source in the presence of an ion-exchanged sodium bentonite activator and-calcium silicate to form a soil amendment comprising calcium carbonate and silicon dioxide.

It is to be understood that the terminology used herein is for the purpose of describing particular aspects only and is not intended to be limiting. Although any methods and materials similar or equivalent to those described herein can be used in the practice or testing of the present disclosure, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present disclosure is not entitled to antedate such publication by virtue of prior disclosure. Further, the dates of publication provided herein may be different from the actual publication dates, which can require independent confirmation.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the present disclosure, example methods and materials are now described.

As used in the specification and the appended claims, the singular forms "a," "an" and "the" include plural referents unless the context clearly dictates otherwise. Thus, for example, reference to "an injector" may include one or more injectors.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and un-substituted alkyl groups.

Disclosed are the components to be used to prepare the products of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

### EXAMPLES

The following examples are provided to illustrate the compositions, processes, and properties of the present disclosure. The examples are merely illustrative and are not intended to limit the disclosure to the materials, conditions, or process parameters set forth therein.

A 20 g sample of bentonite clay was added to 10 g of 30% sodium chloride (NaCl) solution and stirred for 2 hours at 25 °C. The mixture was then filtered and dried at 80 °C for 12 hours. An 80 g sample of slag from a steelmaking plant was ground with the dried bentonite clay and a 20-30 mesh size was selected for treatment with CO₂. An amount of 40 g of the produced mixture was deposited in a Parr reactor into which CO₂ was fed at a flowrate of 30 cubic centimeters per minute (cc/min). Using a back pressure regulator, pressure was regulated in the Parr reactor at a pressure of about 25 bar. The temperature in Parr reactor was maintained at about 80 °C and the reaction continued for 72 hours. The concentration of CaCO₃ in final product after experiment was 90%.

The process was repeated for a comparative sample using the same conditions but without using the slag. The rate of CO₂ reaction with the silicate was low and did not exceed 60%.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference. While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

## Claims

1. A method of forming a soil amendment from metal slag, the method comprising:
a. increasing content of sodium in a bentonite clay via ion exchange by reacting bentonite clay and a sodium salt to provide ion-exchanged sodium bentonite clay, wherein the bentonite clay comprises both sodium and calcium cations, wherein the ion-exchanged bentonite clay contains sodium ions bonded to bentonite structure;
b. feeding carbon dioxide through a reactor containing a mixture of the metal slag and the ion-exchanged sodium bentonite clay; wherein sodium ions of the ion exchanged bentonite clay adsorbs carbon dioxide and transfers the carbon dioxide to a calcium silicate phase of the metal slag;
c. reacting the ion-exchanged sodium bentonite clay with-calcium silicate in a chain fashion to consume the sodium carbonate of the ion-exchanged sodium bentonite clay and provide sodium silicate and calcium carbonate;
d. reacting the sodium silicate with the carbon dioxide to provide sodium carbonate and silicon dioxide; and
e. combining the generated calcium carbonate and silicon dioxide to form the soil amendment,
wherein the metal slag is a calcium slag silicate.

2. The method of claim 1, further comprising forming the soil amendment as a coating material for a nutrient.

3. The method of claim 2, wherein the nutrient comprises nitrogen, phosphorus, potassium, sulfur, or a combination thereof.

4. The method of any one of claims 1-3, wherein the ion exchange of step (b) proceeds at a temperature of 25 °C for 2 hours.

5. The method of any one of claims 1-4, wherein the metal slag is steelmaking slag.

6. The method of any one of claims 1-5, wherein the metal slag comprises calcium oxide, silicone dioxide, iron, magnesium oxide, aluminum oxide, sulfur, phosphorus pentoxide, and manganese (II) oxide.

7. The method of any of claims 1-6, wherein the reacting ion-exchanged sodium bentonite with calcium silicate proceeds by a solid state reaction.

8. The method of any one of claims 1-7, wherein the sodium salt is sodium hydroxide, sodium carbonate, or sodium chloride.

9. The method of any one of claims 1-8, wherein the step (b) feeding carbon dioxide proceeds at a pressure of 25 bar and a temperature of 60 °C.

10. The method of any one of claims 1-9, wherein the method proceeds at a reaction temperature between 80 °C and 120 °C.

11. The method of any one of claims 1-10, wherein the method proceeds at a reaction pressure of from 5 bar to 40 bar.

12. The method of any one of claims 1-11, wherein reactions proceed in a Parr reactor operated in non-continuous mode.

13. The method of any one of claims 1-12, wherein the carbon dioxide is provided from a source comprising one or more gas streams produced from a steelmaking plant.

14. A system for forming a soil amendment, the system comprising:
a gas stream containing carbon dioxide;
a supply of calcium silicate; and
a first reaction chamber for (i) adsorbing an ion-exchanged bentonite clay with the carbon dioxide, (ii) contacting a mixture of metal slag and the ion-exchanged bentonite clay with the carbon dioxide, and (iii) contacting the mixture of metal slag and the ion-exchanged bentonite clay with the calcium metal silicate to provide a carbonate of metal in the metal slag.

15. A method of forming a soil amendment from metal slag, the method comprising: mineralizing a carbon dioxide source in the presence of an ion-exchanged sodium bentonite activator and calcium silicate to form a soil amendment comprising calcium carbonate and silicon dioxide.
